# FASCICULE DE BREVET EUROPEEN

(11) **EP 2 262 844 B1**
(45) Date de publication et mention de la délivrance du brevet: **12.02.2020**
(21) Numéro de dépôt: 09738295.6
(22) Date de dépôt: 27.03.2009
(51) Int. Cl.: C08G 18/10, C08K 3/00, C08K 3/04, C08K 5/524, C09K 21/14, C08J 9/00, C09K 21/00

(54) **DISPOSITIF DE CALFEUTREMENT ET DE GARNISSAGE COUPE FEU**
VORRICHTUNG ZUR ABDICHTUNG UND FÜLLUNG VON FEUERSCHNEISEN
FIRE-BREAK CAULKING AND FILLING DEVICE

(30) Priorité: 28.03.2008 FR 0801710
(43) Date de publication de la demande: 22.12.2010
(73) Titulaire: Compart SAS, 30100 Alès (FR); IFP Energies nouvelles, 92500 Rueil-Malmaison (FR)
(72) Inventeur: SAUTTREAU, Jean, F-30520 St. Martin- De-Valgalgues (FR); BERGOGNE, Laurent, F-30900 Nîmes (FR)
(74) Mandataire: IFP Energies nouvelles
(86) Numéro de dépôt international: PCT/FR2009/000338
(87) Numéro de publication internationale: WO 2009/133261

(56) Documents cités:
- EP-A- 0 400 402
- FR-A- 2 873 300
- US-A- 5 597 885

## Description

Le domaine de la présente invention concerne la protection passive aux incendies, et en particulier les moyens de calfeutrement et/ou de garnissage coupe feu, notamment pour moyens de séparation, tels des joints de dilatation ou des panneaux.

Les joints de séparation, ou de dilatation, sont mis en place entre les dalles ou les voiles (murs) en béton ou maçonnerie. Ces joints sont réalisés en mettant en place une plaque de plastique du type polystyrène, ou une planche, lors du coulage du béton, qui est ensuite retirée après le séchage de la construction. Dans l'emplacement laissé libre par le retrait du polystyrène, ou du matériau de comblement, on place des joints aux propriétés coupe-feu.

Ces joints peuvent être de dimensions variables, statiques (en séparation) ou dynamiques (joint de dilatation J). Les figures la à le montrent différentes configurations conventionnelles:
- la: joint linéaire J dans une construction horizontale;
- 1b: joint linéaire J vertical dans une construction verticale;
- 1c: joint linéaire horizontal J dans une construction verticale;
- 1d: joint horizontal J de mur en butée contre un plancher, ou un plafond;
- 1e: joint horizontal J de plancher en butée contre un mur.

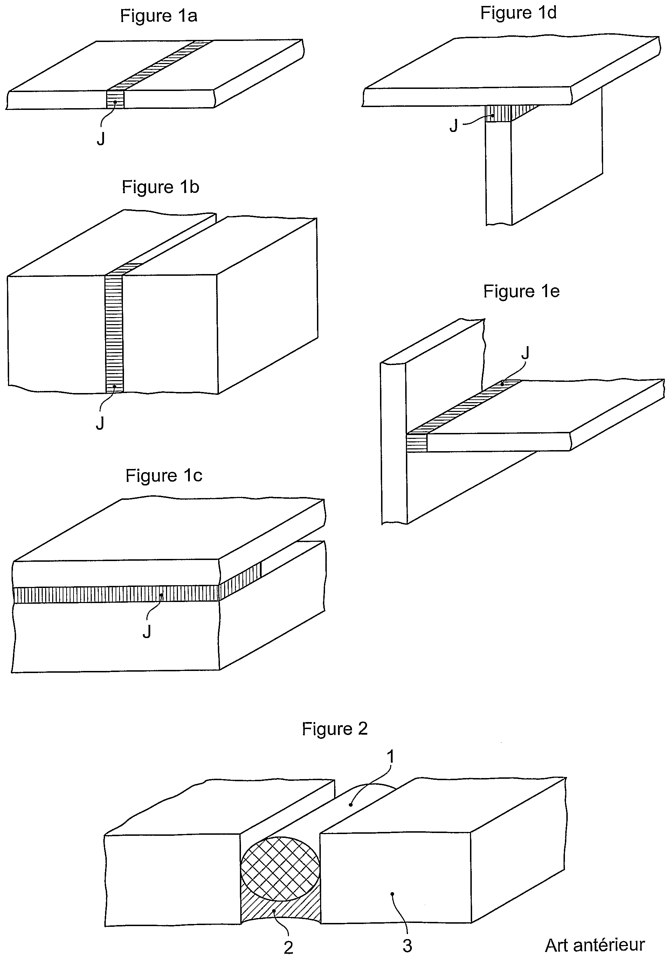

Les solutions actuelles de mise en place des joints sont illustrées sur la figure 2 où la référence 1 désigne un bourrelet, la référence 2 un cordon de colle de maintien, la référence 3 la construction en béton.

Il s'agit d'un procédé très largement utilisé actuellement. Il se compose de plusieurs matériaux permettant de répondre aux contraintes imposées aux joints de dilatation coupe feu :
▪le bourrelet est en laine de roche ou verre. Celui-ci permet d'obtenir une bonne isolation thermique et ainsi un degré coupe feu;
▪une colle silicate pour éviter la chute du cordon en laine de roche;
▪un mastic est généralement lissé sur le bourrelet. Celui-ci permet d'avoir une bonne étanchéité et permet théoriquement l'adaptation aux dilatations de la construction.

D'autres solutions existent qui utilisent un joint en mousse maintenu par un mastic.

Cependant, les solutions actuelles présentent certains inconvénients, notamment:
- l'altération du joint due aux phénomènes de compression et décompression alternées. En effet, il n'est pas rare de constater que des cordons tombent ou s'affaissent dans le temps. Dans ce cas, ils ne jouent plus leur rôle de joint de dilatation coupe feu;
- l'emploi de produits fibreux (cas des laines de roches ou verre) non adaptés aux mouvements de dilatation des bâtiments et nécessitant des équipements de protection individuels adaptés à la pose de ce type de produits;
- dégradation du joint de calfeutrement à cause de sa difficulté de mise en place dans la fente;
- nécessité d'utiliser d'autres matériaux pour le maintien en place du joint de calfeutrement, notamment mastic ou colle.

L'objet de la présente invention est de fournir un système de calfeutrement ou de garnissage coupe feu, en particulier pour joint de séparation, et/ou de dilatation, qui palie les inconvénients de l'art antérieur en optimisant un matériau compressible, non fibreux, adapté à des compressions alternées, facile à mettre en place du fait de sa bonne compressibilité, de cycle de vie allongé, en excluant l'emploi de produits halogénés (au contraire des joints en mousses conventionnels).

Selon la présente invention, le système de calfeutrement ou de garnissage coupe feu a une résistance au feu conforme aux réglementations en vigueur.

Ce système se traduit physiquement sous la forme d'un élément élastique en mousse préformé de section et longueur variable. Il peut être comprimé pour sa mise en place, et s'adapte également aux mouvements du bâtiment grâce à sa composition et sa conception tout en conservant ses propriétés de performance au feu, contrairement aux produits actuels. Il est prêt à l'emploi et ne nécessite aucun matériau de collage supplémentaire.

Sauf indication contraire, les pourcentages massiques sont exprimés par rapport à la masse totale de matériau final (% poids).

Ainsi, la présente invention concerne un dispositif de calfeutrement ou de garnissage ayant des propriétés coupe-feu constitué à partir d'un matériau élastique comportant une mousse de polyuréthanne. La mousse est obtenue par réaction entre :
- au moins un polyol de masse moléculaire compris entre 4000 et 7000 g/mol et d'indice d'OH compris entre 20 et 40 (mg KOH/g) en mélange avec 0,3 à 1,5% poids d'eau comme agent d'expansion, 0,1 à 2% poids d'un système catalytique de type amines, et 0,3 à 0,5% poids d'un agent de stabilisation des cellules,
- et un isocyanate sous forme de pré polymère ou quasi pré polymère comportant entre 5 et 25% de fonctions NCO libres (« teneur en NCO » par rapport au poids d'isocyanate), et en ce que ledit matériau comporte au moins 50% en poids d'agents retardateurs de flamme.

Le polyol peut être combiné avec au moins l'un des produits de réaction suivants: un polyol de masse moléculaire compris entre 2000 et 5000 g/mol. et un indice OH compris entre 20 et 50, un polyol d'indice OH d'environ 28,5, une huile organique.

Les agents retardateurs de flamme peuvent comporter: - un agent de charbonnement physique du type graphite expansé; - un agent de charbonnement réactif; - un agent minéral de vitrification.

L'agent de charbonnement physique peut comprendre au moins deux agents de grade granulométrique différents.

L'huile organique peut être incorporée entre 5 et 40% en poids par rapport au poids total de polyol.

On peut ajouter au moins l'un des additifs suivants en tant que stabilisateur de la croûte de graphite : entre 2 et 5% poids de matériau fibreux de grade compris entre 75 et 250 µm, au plus 2% poids de TiO2.

L'isocyanate peut avoir entre 5 et 15% de fonctions libres NCO ("teneur en NCO" par rapport au poids d'isocyanate).

L'invention concerne également l'utilisation du dispositif selon l'invention pour fabriquer un jonc allongé et de section régulière pour être introduit dans une fente, pour joint de calfeutrement et/ou de dilatation.

L'invention concerne aussi l'utilisation du dispositif selon l'invention, pour fabriquer un garnissage élastique et ayant des caractéristiques coupe feu.

La présente invention sera mieux comprise et ses avantages apparaîtront plus clairement à la lecture de la description qui suit d'exemples de modes de réalisation nullement limitatifs, et illustrés par les figures ci-après annexées, parmi lesquelles:
- les figures la-le montrent des exemples d'application de joints de calfeutrement,
- la figure 2 montre un moyen de calfeutrement selon l'art antérieur,
- les figures 3a, 3b, 3c montrent des formes du joint selon l'invention,
- la figure 4 montre schématiquement la mise en œuvre du joint,
- les figures 5a à 5d montrent les caractéristiques mécaniques de différentes formulations du matériau du joint selon l'invention,

La présente invention a pour objet premier de réaliser au moins deux fonctions:
- assurer l'isolation thermique et l'étanchéité aux gaz chauds lors d'un incendie;
- jouer le rôle de joint de séparation dans une construction.

La combinaison de ces deux fonctions n'est pas assurée par les produits utilisés aujourd'hui.

Le joint selon l'invention présente les avantages suivants:
- se pose sans outil spécifique, ni accessoires ou produits additifs;
- s'adapte aux déformations du support (variation de largeur de fente);
- s'adapte aux dilatations thermiques alternées du support;
- reste en place dans la durée;
- peut être aisément stocké et manutentionné en rouleau;
- résiste aux cycles de gel et de dégel;
- résiste aux contacts d'hydrocarbures;
- assurer une étanchéité à l'eau.

Le dispositif de calfeutrement consiste en un joint composé essentiellement d'un matériau polymère à base de polyuréthanne. Un polyuréthanne est obtenu par réaction entre un polyol (présence de fonctions OH) et un isocyanate (présence de fonctions NCO). Il y a une grande diversité des différentes matières premières à disposition, il en résulte une grande variété de mousses ayant des propriétés chimiques et mécaniques très différentes.

La présente invention repose sur le choix optimisé des matières premières pour obtenir les propriétés désirées:
- un polyol (triol) (polyol 1), de préférence un polyéther présentant une masse moléculaire comprise entre 4000 et 7000 g/mol et un indice d'OH (mg KOH/g) compris entre 20 et 40 permettant d'obtenir une très bonne résilience. En effet, la rigidité du polyuréthanne est fonction de la grandeur des chaînes du polyol (et donc de la masse moléculaire) entre les ponts uréthannes. Par exemple, pour créer des systèmes rigides, on utilisera préférentiellement des polyols à chaînes courtes, de masse moléculaire inférieure à 2000 g/mol.

Le polyol ci-dessus peut être utilisé seul, mais aussi en combinaison avec d'autres polyols:
- un polyol (triol) présentant un poids moléculaire de 2000 à 5000 g/mol et un indice d'OH de 30 à 50 (polyol 2)
- un polyol (diol) avec un indice d'OH de 28,5(polyol 3)
- des produits "extendeurs" (huile 4) du type huiles organiques (chanvre, ricin, palme) pouvant être incorporés entre 5 et 40% en poids par rapport au poids total de polyol, soit 2 à 13% du poids total, en substitution d'au moins un polyol. On a constaté que dans ces proportions, ces huiles permettent d'obtenir une bonne souplesse;
- un isocyanate sous forme de pré polymères ou quasi prépolymères, du type MDI ou TDI, qui ont pré réagis avec des polyols et comportent entre 5 à 25% de fonctions NCO libres par rapport au poids d'isocyanate (l'isocyanate représentant de préférence environ de 10 à 25% en poids du produit final). En fonction des polyols utilisés, on adapte le choix de l'isocyanate: on peut utiliser un isocyanate 1 ayant de 15 à 25% de fonctions libres NCO par rapport au poids d'isocyanate, ou un isocyanate 2 ayant de 5 à 15% de fonctions libres NCO par rapport au poids d'isocyanate;
- au moins un catalyseur de type amines tertiaires favorisant l'ouverture des cellules lors de la réaction d'expansion, le pourcentage massique étant compris entre 0,1 et 2%;
- au moins un agent de stabilisation et d'homogénéisation des cellules (par exemple une silicone), le pourcentage massique étant compris entre 0,3 et 0,5%;
- au moins un agent d'expansion : de préférence, il s'agit d'eau en quantité comprise entre 0,3 à 1,5% poids. Les meilleurs résultats sont obtenus avec une addition entre 0,6 à 0,9 % d'eau en poids (compromis résistance au feu/souplesse). Toutefois, on peut utiliser en complément de l'eau (en co-agent gonflant), un agent d'expansion non réactif type méthylal entre 1,5 à 3% poids pour limiter l'effet de peau se formant à la surface du produit (cas d'une expansion libre). Dans ce cas il est nécessaire d'utiliser un catalyseur aminé type 2-dimethyl-aminoethyl-ether, dilué ou non, afin d'augmenter l'exothermie de la réaction pour obtenir les gaz méthylal (point d'ébullition à T=42,3°C).
- des retardateurs de flamme comprenant:
   - au moins un agent de charbonnement physique comportant une combinaison de graphite expansé ou équivalent (vermiculite,...) à différents grades (grade de 150 à 300 µm) de 19 à 25% en masse. Cet agent de charbonnement est l'additif essentiel pour une résistance au feu importante. Le grade de graphite expansé à 300 µm doit être utilisé préférentiellement car il permet d'obtenir un meilleur comportement au feu que le grade plus fin et dégrade moins les propriétés mécaniques du produit alvéolaire obtenu. Le grade plus fin (150 µm) peut être utilisé en complément (4 à 10% poids, de préférence 5% poids) afin d'avoir une couche charbonnée plus cohésive (dispersion des particules).
   - au moins un agent de charbonnement réactif comportant un phosphate, notamment tricrésyl phosphate ou équivalent, entre 15 et 20% en masse. Celui-ci a en effet deux rôles : plastifiant et ignifugeant ce qui explique son fort pourcentage dans la matrice. Dans la catégorie des agents réactifs, on n'utilise pas d'ammonium polyphosphate. En effet, cet additif perturbe la formation de la mousse et ne permet pas de répondre aux fonctionnalités demandées.
   - au moins un agent minéral du type mélange de poudre de verre, ou mica, borate de zinc pour former une couche vitrifiée lors de la montée en température, et stabiliser l'expansion du graphite. En effet, le borate de zinc, ou préférentiellement le stannate de zinc non classé comme dangereux pour l'environnement, se décompose quant à lui, entre 130 et 270°C en libérant de l'eau. Ce dernier, se ramollit vers 350°C et s'écoule au-dessus de 500°C pour former une couche vitreuse. Dans le cas des polymères contenant de l'oxygène, la présence d'acide borique ou stannique entraîne une déshydratation qui conduit à la formation d'une couche charbonnée. Ces couches constituent un écran thermique et protègent le polymère et permettent aussi une réduction des fumées.

La poudre de verre intervient à plus haute température (900°C). Elle peut être substituée par exemple, par du mica, de la fillite ou de la montmorillonite;

On effectue l'addition entre 6 et 10% poids de chacun des agents au maximum. En effet, l'utilisation d'une quantité plus forte entraîne une perte des propriétés mécaniques de la mousse et aussi une diminution des propriétés au feu (comportements antagonistes entre graphites et borate/stannate).
- des fibres peuvent être utilisées aussi pour stabiliser la croûte de graphite (par exemple des fibres de cellulose) de grade de 75 à 250 µm et entre 2 et 5% en poids.
- ajout à un faible pourcentage de TiO2, inférieur à 2% poids en tant que stabilisateur de croûte.

Le pourcentage total d'additifs retardateurs de flamme dans le matériau est au moins 50% en poids ce qui permet d'avoir un bon comportement au feu par rapport aux propriétés de base du polymère. Ce taux est élevé par rapport aux produits conventionnels. Dans le cas de la présente invention, les propriétés désirées sont obtenues notamment grâce à la combinaison des résines, l'ajout d'extendeur, et une bonne répartition des charges.

Ci-dessous, plusieurs exemples de formulations permettant d'obtenir les caractéristiques escomptées pour le produit selon l'invention: (les pourcentages indiqués sont des pourcentages massiques exprimés par rapport à la masse totale de produit final : % poids)

| **Produits** | **F-N°1** | **F-N°2** | **F-N°3** | **F-N°4** | **F-N°5** | **F N°6** |
|---|---|---|---|---|---|---|
| **Polyol 1** | 31,02 | 13,5 | 20 | 34,06 | 34,06 | 22,46 |
| **Polyol 2** | | 13,5 | | | | |
| **Polyol 3** | | 3,6 | | | | |
| **Huile 4** | | | 12 | | | |
| **Catalyseur** | 0,2 | 0,2 | 0,2 | 0,2 | 0,2 | 0,2 |
| **Eau** | 0,9 | 0,9 | 0,9 | 0,9 | 0,9 | 1 |
| **Silicone** | 0,3 | 0,3 | 0,3 | 0,3 | 0,3 | 0,3 |
| **Isocyanate 1** | 15 | 14 | 14 | 16 | 16 | |
| **Isocyanate 2** | | | | | | 25,5 |
| **Graphite 300** | 22,46 | 23,46 | 23,46 | 20 | 20 | 20 |
| **Tricrésyl phosphate** | 17,12 | 17,12 | 17,12 | 15,12 | 15,12 | 17,12 |
| **Borate de zinc** | 7 | 7,25 | 7,25 | 9,42 | 7,42 | 7,25 |
| **Quartz** | 6 | 6,17 | 6,17 | | | |
| **Silicate** | | | | | 6 | 6,17 |
| **Fibres** | | | | 2 | | |
| **TiO2** | | | | 2 | | |

### Test de "reprise élastique":

La reprise élastique en compression d'un matériau consiste à le laisser reprendre ses dimensions après qu'il ait été soumis à une déformation de compression (écrasement). Cet essai caractérise la capacité du matériau à conserver le contact avec ses supports après écrasement. Dans le cas présent, on caractérise la reprise élastique au cours du temps, en effectuant un nombre important de cycles de compression/relâchement.

Les essais de reprise élastique sont réalisés entre deux plaques parallèles, avec mesures de la distance entre plaques et des efforts de compression. La mise en place du joint se fait toujours avec une légère compression initiale puisque l'ouverture dans laquelle le joint est introduit est toujours plus petite pour que ce dernier puisse tenir sans adhésif.

Une reprise élastique donnée à 100% correspond au cas où le joint, après écrasement et relâchement, conserve des propriétés viscoélastiques suffisantes pour exercer une force de compression sur les supports. Le matériau du joint garde donc en permanence le contact avec le support, assurant ainsi la fonction d'étanchéité et de maintien.

Une reprise élastique inférieure à 100% correspond au cas où il y a perte de contact entre le joint et les supports après une déformation donnée. Ce comportement peut être dû à une viscoélasticité trop faible du matériau, ou à sa dégradation.

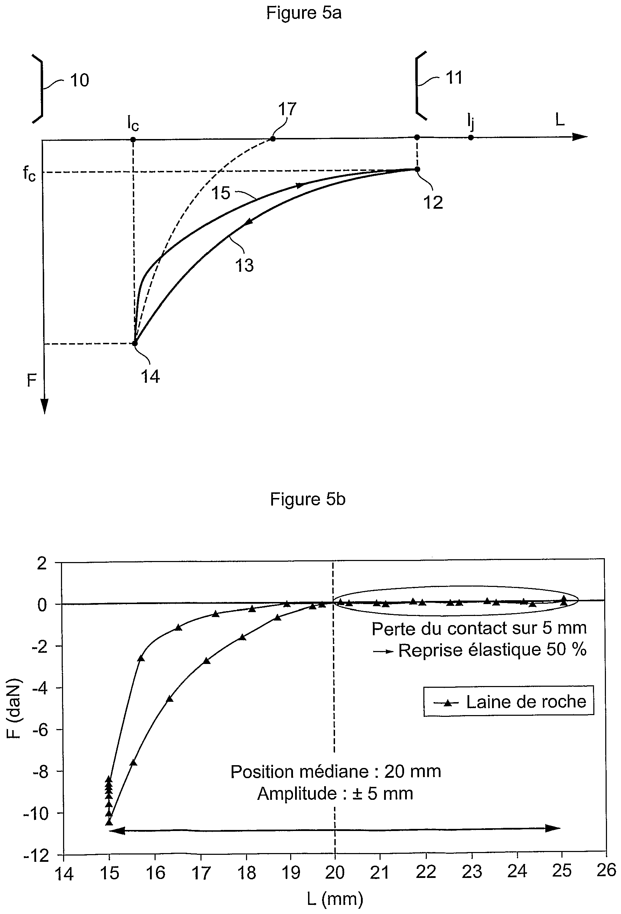

La figure 5a montre le type de graphique caractérisant la reprise élastique d'un matériau. L mesure la distance entre les plaques d'écrasement symbolisées sur les figures sous les références 10 et 11. L'axe vertical donne la force F appliquée par les plaques. La référence lj donne la largeur d'origine du joint selon l'invention. Le point 12 matérialise le joint inséré en compression entre les deux plaques: son épaisseur est diminuée et il est légèrement comprimée de la valeur fc. Lors de la compression par la plaque 11, l'état du joint suit la courbe 13 jusqu'au point 14 où le joint a une épaisseur lc. Pendant la relaxe de la plaque 11, l'état du joint suit la courbe 15, avec un point de retour proche du point d'origine 12. Dans ce cas, la reprise élastique est de 100%. Si l'état du joint suit la courbe 16, pour aboutir dans le voisinage du point 17, la reprise élastique est inférieure à 100% puisque l'épaisseur du joint est inférieure à celle du point de départ.

La figure 5b illustre les capacités de reprise élastique d'un joint en laine de roche, d'épaisseur 25 mm, qui clairement n'a pas de reprise élastique efficace mais seulement de 50%.

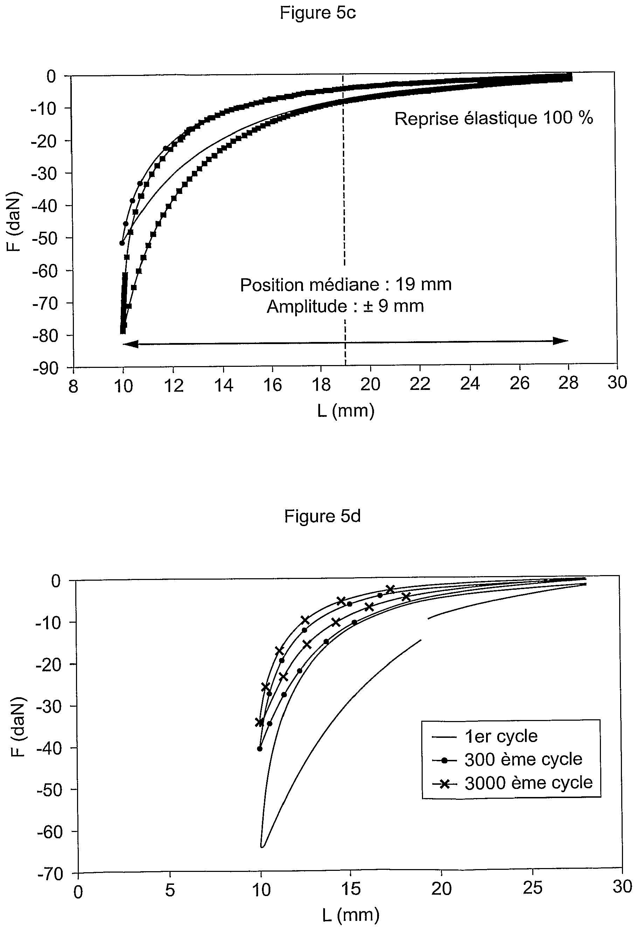

La figure 5c montre les essais de reprise élastique sur des joints d'épaisseur 28 mm en matière selon la formulation n°1 et selon la formulation N°6. Les tests ont été faits sur 10 cycles, on observe une reprise élastique équivalente et de 100% pour les deux échantillons de joints, malgré le taux important (supérieur à 50%) de charges coupe feu.

### Durabilité de la reprise élastique :

S'il est intéressant de connaître la reprise élastique d'un joint à un instant donné, il est aussi important de connaître l'évolution de cette reprise élastique dans le temps. Pour cela, on impose des cycles de déformations sur un échantillon de joint.

L'évolution de la reprise élastique au cours du temps est mieux mise en évidence sur la figure 5d. Sur cette figure, on a reporté les courbes de la reprise élastique du 1^{er} cycle, du 300^{ème} cycle et du 3000^{ème} cycle pour un joint de forme cylindrique d'épaisseur 28 mm, et en matériau selon la formulation N°1. On constate qu'au bout de 3000 cycles, la reprise élastique est toujours égale à 100 %.

### Test au feu:

Les échantillons de joint sont de géométrie identiques et mesurent: longueur : 200 mm; hauteur : 50 mm; épaisseur : 37 mm.

Les échantillons sont placées dans un support non combustible de la même dimension (le joint n'est donc pas comprimé) et sont testés dans leur épaisseur.

Un bec bunsen est placé à 5 cm du produit.

On enflamme le produit pendant 5 minutes.

On mesure ensuite la hauteur de joint non consommé par la flamme.

La hauteur de joint donne une indication objective sur la qualité du système ignifugeant utilisé. Plus cette hauteur de joint est élevée, plus le système ignifuge a joué son rôle de bouclier thermique.

**Tableau A**

| | Hauteur de joint non consommé | % de joint brûlé |
|---|---|---|
| Formulation N°1 | 3 cm | 14% |
| Formulation N°4 | 3,5 cm | 5% |
| Formulation N°5 | 3,5 cm | 5% |

Les additifs du type fibres, silicate, et TiO2 permettent d'accroître la résistance au feu du matériau. Le pourcentage de joint brûlé est nettement plus faible lorsque l'on utilise ce type d'additifs.

Dans la formulation N°1, la totalité du système polymère atteint 47,42% en poids. Cette partie polymère est constituée d'un seul polyol de poids moléculaire 6000 g/mol, et d'indice OH d'environ 26. Le pourcentage de 47,42% d'additif polymère permet d'obtenir une reprise élastique du matériau de 100%, avec une bonne tenue au feu comme le montre les essais ci-après.

Dans la formulation N°2, la totalité du système polymère atteint 46% poids. Cette partie polymère est constitué de plusieurs polyols : polyol de poids moléculaire 6000 g/mol, et d'indice OH d'environ 26, un polyol (triol) présentant un poids moléculaire de 2000 à 5000 g/mol et un indice d'OH de 30 à 50 (polyol 2) et un polyol (diol) avec un indice d'OH de 28,5 (polyol 3). L'intérêt de ce mélange est de renforcer les propriétés mécaniques du produit.

Dans la formulation N°3, on utilise une huile en combinaison avec le polyol de poids moléculaire 6000 g/mol, et d'indice OH d'environ 26. Les huiles apportent de la souplesse supplémentaire au produit. Dans cette formulation, la totalité du système polymère atteint 47,4%.

Dans les formulations N°4 et 5, la totalité du système polymère atteint 51,46% en poids. L'utilisation de fibres et de tiO2 dans la formulation 4 et de silicate dans la formulation 5 permettent d'augmenter les performances au feu du produit comme le montre le tableau A ci-dessus.

Dans la formulation N°6, la totalité du système polymère atteint 49,46% poids. Dans cette formulation, on utilise l'isocyanate 2 à hauteur de 25,5% poids. Cet isocyanate permet d'obtenir une meilleure résistance à la déchirure que l'isocyanate 1.

### Procédé et mode d'obtention:

On procède généralement par un ajout préalable des différents additifs dans le polyol.

On fait réagir ensuite le mélange polyol/additifs avec l'isocyanate, soit par mélange manuel, soit par machine basse pression ou haute pression. On coule le mélange dans le moule prévu à cet effet. On peut aussi procéder par injection en continu. Le mélange est alors coulé en continu sur une bande transporteuse.

Le système de moulage doit permettre une expansion libre de la mousse mais il s'agit d'un moule que l'on ferme après la coulée afin d'éviter les phénomènes de formation de peau.

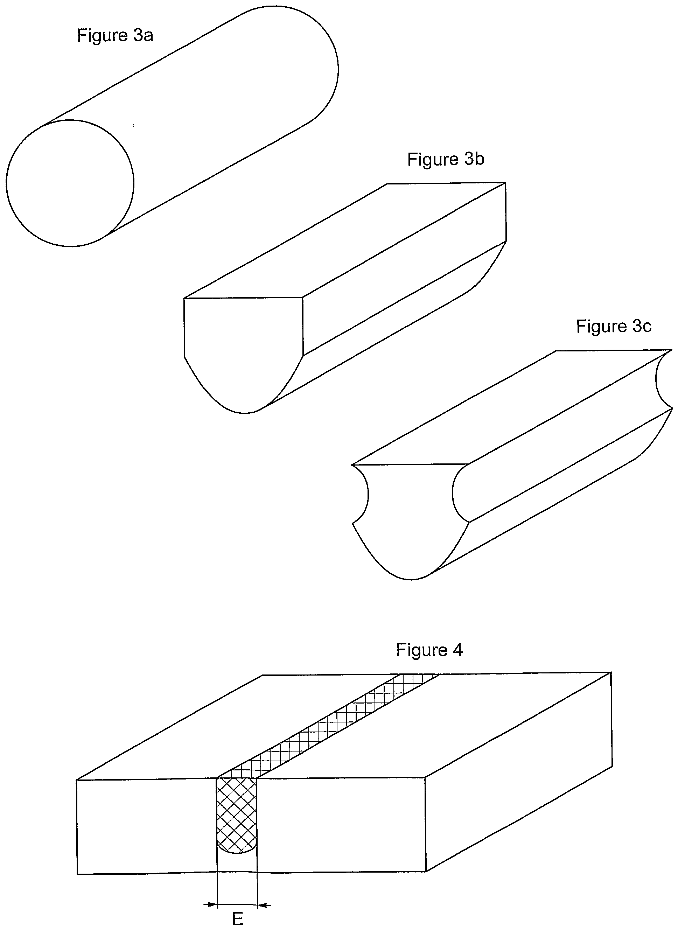

Des exemples de formes de joints réalisables sont illustrés sur les figures 3a, 3b et 3c.

La section du joint figure 3a (cercle) mesure 804,2 mm².

La section du joint figure 3b mesure 867,5 mm².

La section du joint figure 3c mesure 887,5 mm².

La longueur moyenne d'un rouleau de joint peut être de 10 mètres. Dans le cas d'une jonction entre deux rouleaux, les extrémités des joints peuvent être mis bout à bout, sans découpe particulière, pour pouvoir être mis en place en compression tout en gardant une étanchéité parfaite.

La figure 4 montre un schéma de mise en place dans une fente de largeur E.

Une gamme de joints coupe feu peut être réalisée pour répondre aux différents cas. Les ouvertures, ou fentes, sont comprises pour la plupart entre 10 et 100 mm. Dans le cas de cette application particulière, on peut fabriquer un, ou plusieurs joints spécifiques pour chaque largeur d'ouverture de fente:

| Largeur de fente (mm) | Dimensions possibles du joint de calfeutrement - (largeurxépaisseur) (mm) |
|---|---|
| 10 | 20×30 |
| 20 | 35,8×40/50 |
| 30 | 48,8×50 |
| 40 | 65×55 |
| 50 | 81,3×60 |
| 60 | 97,5×65 |
| 70 | 120×70 |
| 80 | 140×80 |
| 100 | 160×90 |

La présente invention ne se limite pas à des joints coupe feu, mais porte aussi sur toutes les applications qui peuvent avantageusement être mises en œuvre avec un matériau isolant subissant des contraintes dimensionnelles de compression ou d'élongation nécessitant de forte capacité de reprise élastique sur un nombre de cycles élevé, une bonne isolation thermique (Conductivité thermique de 29 mW.m-1.K-1), un bon comportement au feu, et éventuellement une atténuation phonique (Facteur K de performance sonore moyen de 60 à 90%).

Ces applications peuvent être: des garnissages de panneaux, de fauteuils, de matelas. Des calorifugeages de tuyaux, des écrans de cantonnement, des écrans thermiques souples ou des rideaux souples coupe feu.

### Exemple d'application du joint et performance

Le mélange réactionnel est coulé dans des moules de section 48 ^{∗} 30 mm ; 55 ^{∗}43 mm ; 74^{∗}61 ; et 94 ^{∗}83. Cela permet d'obtenir des longueurs de joint en mousse de longueurs différentes.

Ces joints sont introduits manuellement en compression entre des dalles de béton. Les raccords de joints sont réalisés par coupe droite et sans recouvrement.

Les joints sont ensuite testés selon la nouvelle norme européenne d'essai de résistance au feu EN1366-4.

Les joints sont soumis et exposés à la flamme pendant une durée de 240 minutes.

Les conditions d'exposition sont les suivantes. Les produits sont soumis à la courbe de température/temps : T=345log(10)(8t+1) + 20

Avant l'essai, produit est soumis à une décompression en écartant les dalles de 20% de l'épaisseur initiale.

Les produits ainsi testés avec la formulation selon l'invention permettent d'obtenir une isolation thermique pendant 240 minutes (élévation inférieure à 180°C côté non exposé) et une étanchéité au gaz chauds et aux fumées pendant 240 minutes (pas d'inflammation lors de l'approche d'un coton face non exposée).

## Revendications

1. Dispositif de calfeutrement ou de garnissage ayant des propriétés coupe-feu constitué à partir d'un matériau élastique comportant une mousse de polyuréthanne, **caractérisé en ce que** ladite mousse est obtenue par réaction entre :
- au moins un polyol de masse moléculaire compris entre 4000 et 7000 g/mol et d'indice d'OH compris entre 20 et 40 (mg KOH/g), en mélange avec 0,3 à 1,5% poids d'eau comme agent d'expansion, 0,1 à 2% poids d'un système catalytique de type aminés, 0,3 à 0,5% poids d'un agent de stabilisation des cellules (par rapport au poids dudit matériau),
- et un isocyanate sous forme de pré polymère ou quasi pré polymère comportant entre 5 et 25% de fonctions NCO libres (teneur en NCO par rapport au poids d'isocyanate),
et **en ce que** ledit matériau comporte au moins 50% en poids d'agents retardateurs de flamme.

2. Dispositif selon la revendication 1, dans lequel ledit polyol est combiné avec au moins l'un des produits de réaction suivants: un polyol de masse moléculaire compris entre 2000 et 5000 g/mol. et un indice OH compris entre 20 et 50, un polyol d'indice OH d'environ 28,5, une huile organique.

3. Dispositif selon l'une des revendications 1 ou 2, dans lequel les agents retardateurs de flamme comportent: - un agent de charbonnement physique du type graphite expansé; - un agent de charbonnement réactif; - un agent minéral de vitrification.

4. Dispositif selon la revendication 3, dans lequel ledit agent de charbonnement physique comprend au moins deux agents de grade granulométrique différents.

5. Dispositif selon l'une des revendications 3 ou 4, dans lequel ledit agent de charbonnement physique comprend au moins un graphite ayant un grade de 150 à 300 µm.

6. Dispositif selon l'une des revendications précédentes, dans lequel le polyol est mélangé avec 0,6 à 0,9% poids d'eau comme agent d'expansion.

7. Dispositif selon l'une des revendications 2 à 6, dans lequel ladite huile organique est incorporée entre 5 et 40% en poids par rapport au poids total de polyol.

8. Dispositif selon l'une des revendications précédentes, dans lequel on ajoute au moins l'un des additifs suivants en tant que stabilisateur de la croûte de graphite : entre 2 et 5% poids de matériau fibreux de grade compris entre 75 et 250 µm, au plus 2% poids de TiO2.

9. Dispositif selon l'une des revendications précédentes, dans lequel ledit isocyanate a entre 5 et 15% de fonctions libres NCO (teneur en NCO par rapport au poids d'isocyanate).

10. Utilisation du dispositif selon l'une des revendications 1 à 9, pour fabriquer un jonc allongé et de section régulière pour être introduit dans une fente, pour joint de calfeutrement et/ou de dilatation.

11. Utilisation du dispositif selon l'une des revendications 1 à 9, pour fabriquer un garnissage élastique et ayant des caractéristiques coupe feu.

## Patentansprüche

1. Vorrichtung zur Abdichtung oder Füllung mit Brandschutzeigenschaften, hergestellt aus einem elastischen Material, umfassend Polyurethanschaum, **dadurch gekennzeichnet, dass** der Schaum hergestellt wird durch Reaktion zwischen:
- mindestens einem Polyol mit einer Molekularmasse zwischen 4000 und 7000 g/mol und einem OH-Index zwischen 20 und 40 (mg KOH/g) im Gemisch mit 0,3 bis 1,5 Gew2.-% Wasser als Treibmittel, 0,1 bis 2 Gew.-% eines katalytischen Systems vom Typ Amine, 0,3 bis 0,5 Gew.-% eines Stabilisierungsmittels der Zellen (bezogen auf das Gewicht des Materials),
- und einem Isocyanat in Form eines Präpolymers oder quasi Präpolymers, umfassend zwischen 5 und 25 % freie NCO Funktionen (Gehalt an NCO bezogen auf das Isocyanat-Gewicht),
und dass das Material mindestens 50 Gew.-% von Flammhemmern umfasst.

2. Vorrichtung nach Anspruch 1, bei der das Polyol mit mindestens einem der folgenden Reaktionsprodukte kombiniert wird: einem Polyol mit einer Molekularmasse zwischen 2000 und 5000 g/mol und einem OH-Index zwischen 20 und 50, einem Polyol mit einem OH-Index von ungefähr 28,5, einem organischen Öl.

3. Vorrichtung nach einem der Ansprüche 1 oder 2, bei der die Flammhemmer umfassen:
- ein physikalisches Verkohlungsmittel des Typs expandierten Graphits;
- ein reaktives Verkohlungsmittel;
- ein mineralisches Verglasungsmittel.

4. Vorrichtung nach Anspruch 3, bei der das physikalische Verkohlungsmittel mindestens zwei Wirkstoffe mit unterschiedlichen Körnungsgraden umfasst.

5. Vorrichtung nach einem der Ansprüche 3 oder 4, bei der das physikalische Verkohlungsmittel mindestens Graphit mit einem Grad von 150 bis 300 µm umfasst.

6. Vorrichtung nach einem der vorhergehenden Ansprüche, bei der das Polyol mit 0,6 bis 0,9 Gew.-% Wasser als Treibmittel gemischt wird.

7. Vorrichtung nach einem der Ansprüche 2 bis 6, bei der das organische Öl zwischen 5 und 40 Gew.-% bezogen auf das Gesamtgewicht von Polyol eingegliedert wird.

8. Vorrichtung nach einem der vorhergehenden Ansprüche, bei der mindestens einer der folgenden Zusatzstoffe als Stabilisator der Graphitkruste hinzugefügt wird: zwischen 2 und 5 Gew.-% eines Fasermaterials mit einem Grad zwischen 75 und 250 µm, höchstens 2 Gew.-% TiO2.

9. Vorrichtung nach einem der vorhergehenden Ansprüche, bei der das Isocyanat zwischen 5 und 15 % freie NCO Funktionen hat (Gehalt an NCO bezogen auf das Isocyanat-Gewicht).

10. Verwendung der Vorrichtung nach einem der Ansprüche 1 bis 9, um einen länglichen Körper mit regelmäßigem Querschnitt, um in einen Schlitz eingeführt zu werden, für eine Abdichtungs- und/oder Dehnungsfuge herzustellen.

11. Verwendung der Vorrichtung nach einem der Ansprüche 1 bis 9, um eine elastische Füllung mit Brandschutzeigenschaften herzustellen.

## Claims

1. Weatherstripping or packing system having firebreak properties formed from an elastic material comprising a polyurethane foam, **characterized in that** the said foam is obtained by reaction between:
- at least one polyol with a molecular weight of between 4000 and 7000 g/mol and with an OH number of between 20 and 40 (mg KOH/g), as a mixture with from 0.3% to 1.5% by weight of water as blowing agent, from 0.1% to 2% by weight of a catalytic system of amine type and from 0.3% to 0.5% by weight of an agent for stabilizing the cells (with respect to the weight of the said material),
- and an isocyanate in the prepolymer or virtually prepolymer form comprising between 5% and 25% of free NCO functional groups (NCO content with respect to the weight of isocyanate),
and **in that** the said material comprises at least 50% by weight of flame retardants.

2. System according to Claim 1, in which the said polyol is combined with at least one of the following reaction products: a polyol with a molecular weight of between 2000 and 5000 g/mol and an OH number of between 20 and 50, a polyol with an OH number of approximately 28.5 and an organic oil.

3. System according to either of Claims 1 and 2, in which the flame retardants comprise:
- a physical carbonizing agent of expanded graphite type;
- a reactive carbonizing agent;
- an inorganic vitrifying agent.

4. System according to Claim 3, in which the said physical carbonizing agent comprises at least two agents of different particle size grades.

5. System according to either of Claims 3 and 4, in which the said physical carbonizing agent comprises at least one graphite having a grade of 150 to 300 microns.

6. System according to one of the preceding claims, in which the polyol is mixed with from 0.6% to 0.9% by weight of water as blowing agent.

7. System according to one of Claims 2 to 6, in which the said organic oil is incorporated at between 5% and 40% by weight, with respect to the total weight of polyol.

8. System according to one of the preceding claims, in which at least one of the following additives is added as stabilizer of the graphite crust: between 2% and 5% by weight of fibrous material with a grade of between 75 and 250 microns, at most 2% by weight of TiO₂.

9. System according to one of the preceding claims, in which the said isocyanate has between 5% and 15% of free NCO functional groups (NCO content with respect to the weight of isocyanate).

10. Use of the system according to one of Claims 1 to 9 for manufacturing an elongated strip of even cross section in order to be introduced into a slot, for a weatherstripping and/or expansion joint.

11. Use of the system according to one of Claims 1 to 9 for manufacturing an elastic packing having firebreak characteristics.
